# EUROPEAN PATENT APPLICATION

(11) **EP 2 661 970 A1**
(43) Date of publication of application: **13.11.2013**
(21) Application number: 12732153.7
(22) Date of filing: 06.01.2012
(51) Int. Cl.: A23L 1/32, A23L 1/03, A23P 1/16

(54) **FOAM-CONTAINING PROCESSED FOOD, METHOD FOR PRODUCING SAME AND FOOD USING FOAM-CONTAINING PROCESSED FOOD**

(30) Priority: 06.01.2011 JP 2011001522
(71) Applicant: Kewpie Corporation, Tokyo 150-0002 (JP)
(72) Inventor: UENO Hidetomo, Fuchu-shi Tokyo 183-0034 (JP); WATANABE Masanori, Fuchu-shi Tokyo 183-0034 (JP)
(74) Representative: Winter, Brandl, Fürniss, Hübner, Röss, Kaiser, Polte - Partnerschaft
(86) International application number: PCT/JP2012/050142
(87) International publication number: WO 2012/093709

(57) **Abstract**

There is provided a meringue-like foamy aerated processed food product that has a pleasant melt-in-the-mouth texture and high foam stability and can be distributed in a frozen state, a method for producing the aerated processed food product, and a food produced using the aerated processed food product. An aerated processed food product that has a fat content of 5% or less and a viscosity (20°C) of 40 to 150 Pa·s and containsegg white, whey, and a hydrogenated starch hydrolysate derived from a raw sugar having a DE value of 40 or less.

## Description

### Technical Field

The present invention relates to a meringue-like aerated processed food product having a pleasant melt-in-the-mouth texture and high foam stability, a method for producing the aerated processed food product, and a food produced using the aerated processed food product.

### Background Art

The main characteristic of meringue produced by whipping egg white is that it melts instantaneously in the mouth. Because of this pleasant melt-in-the-mouth characteristic, meringue is used in various dishes. For example, meringue is kneaded into dough, such as in the case of making sponge or souffle, and is baked. Meringue is used as a topping in meat dishes and fish dishes. Meringue is mixed with sherbet, ice cream, mousse, or another material. Meringue is frozen and is used as a topping for sherbet, ice cream, mousse, or another material. See Patent Literature 1.

If aerated processed food products having a pleasant melt-in-the-mouth texture that can be used in various dishes like meringue and have high foam stability can be industrially produced and distributed, this can conveniently save time and effort compared with whipping egg white for each dish in restaurants.

According to one known method for producing an aerated processed food product having a pleasant melt-in-the-mouth texture and high foam stability, the S2L triglyceride (wherein S denotes stearic acid and palmitic acid, and L denotes linoleic acid) content of a fat in an oil-in-water emulsion containing the fat, a fat-free milk solid component, and water is in the range of 0.8% to 18% (see Patent Literature 2). This method, however, impairs the melt-in-the-mouth texture probably because of the fat. Although the foam stability of emulsion has also been extensively studied as reported in the literature as well as in Patent Literature 2, the foam stability, melt-in-the-mouth characteristic, and foamability of an aqueous foam product have not been studied.

### Citation List

### Patent Literature

PTL 1: Japanese Patent No. 4138156
PTL 2: WO 2006/112138

### Summary of Invention

### Technical Problem

Accordingly, it is an object of the present invention to provide a meringue-like foamy aerated processed food product that has a pleasant melt-in-the-mouth texture and high foam stability and can be distributed in a frozen state, a method for producing the aerated processed food product, and a food produced using the aerated processed food product. Solution to Problem

As a result of extensive studies to solve the problems described above, the present inventors completed the present invention by finding that an aerated processed food product that has a pleasant melt-in-the-mouth texture characteristic of meringue and high foam stability and can be distributed in a frozen state, a method for producing the aerated processed food product, and a food produced using the aerated processed food product can unexpectedly be provided when the aerated processed food product has a fat content of 5% or less and a viscosity (20°C) in the range of 40 to 150 Pa·s and contains egg white, whey, and a hydrogenated starch hydrolysate derived from a raw sugar having a particular DE value.

The present invention provides
(1) an aerated processed food product having a fat content of 5% or less and a viscosity (20°C) of 40 to 150 Pa·s characterized by containing egg white, whey, and a hydrogenated starch hydrolysate derived from a raw sugar having a DE value of 40 or less,
(2) the aerated processed food product according to (1), wherein the aerated processed food product has a specific gravity of 0.3 to 0.7,
(3) the aerated processed food product according to (1) or (2), wherein the aerated processed food product has a pH of 4.5 to 6,
(4) the aerated processed food product according to any one of (1) to (3), produced by whipping a mixture containingegg white, whey, and a hydrogenated starch hydrolysate derived from a raw sugar having a DE value of 40 or less, heating the mixture at a temperature of 60°C to 90°C, and packing the product in a container,
(5) a food, produced using the aerated processed food product according to any one of (1) to (4),
(6) the food according to (5), wherein the food is one of acid seasonings, sauces, processed egg products, frozen desserts, drinks, and fried food, and
(7) a method for producing an aerated processed food product having a fat content of 5% or less and a viscosity (20°C) of 40 to 150 Pa·s, characterized by including: whipping a mixture containingegg white, whey, and a hydrogenated starch hydrolysate derived from a raw sugar having a DE value of 40 or less; heating the mixture at a temperature of 60°C to 90°C; and packing the product in a container.

### Advantageous Effects of Invention

The present invention can provide a meringue-like foamy aerated processed food product that has a pleasant melt-in-the-mouth texture and high foam stability. Since the aerated processed food product has high foam stability, the aerated processed food product rarely collapses even when the aerated processed food product is mixed with another food material. Furthermore, when the aerated processed food product is frozen or baked, the aerated processed food product also rarely collapses and has freezing resistance and heat resistance. Thus, an aerated processed food product according to the present invention can be stored or distributed in a frozen state. An aerated processed food product according to the present invention can be mixed with various food materials, can be used as a topping, or can be used as a meringue-like food material that can be frozen or baked together with these food materials.

### Brief Description of Drawings

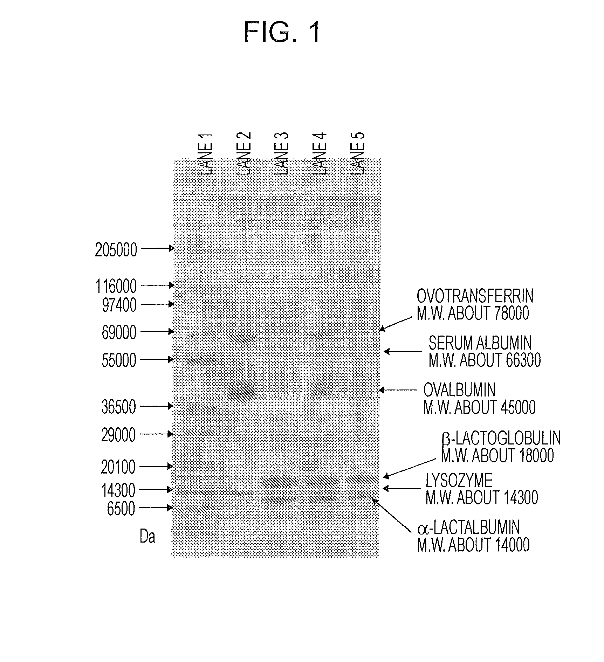

[Fig. 1] Fig. 1 is an electrophoresis photograph before and after heating of an aerated mixture according to Example 7 in sodium dodecyl sulfate-polyacrylamide gel electrophoresis (SDS-PAGE).

### Description of Embodiments

An aerated processed food product according to the present invention will be described in detail below. The term "%", as used herein, refers to "% by mass".

The term "aerated processed food product", as used herein, refers to a food produced by whipping a mixture so as to disperse air bubbles throughout the food. An aerated processed food product according to the present invention has a fat content of 5% or less and a viscosity (20°C) in the range of 40 to 150 Pa·s and contains egg white, whey, and ahydrogenated starch hydrolysate derived from a raw sugar having a DE value of 40 or less as the main components of the foam.

An aerated processed food product according to the present invention has a fat content of 5% or less, preferably 1% or less, more preferably substantially zero. A fat content of more than the content described above unfavorably results in an unpleasant melt-in-the-mouth texture. Furthermore, the foam may collapse because of fat separation. The term "fat", as used herein, refers to, but is not limited to, soybean oil, rapeseed oil, butter, yolk oil, yolk, or soybean.
An aerated processed food product according to the present invention is not an emulsion of oil and water but is an aqueous aerated processed food product (an aerated processed food product having a fat content of 5% or less). Aqueous aerated processed food products are more likely to collapse than aerated emulsions particularly under a load, such as freezing or baking. An aqueous aerated processed food product according to the present invention, however, contains bulky foam and has a pleasant melt-in-the-mouth texture and high foam stability.

An aerated processed food product according to the present invention has a viscosity (20°C) in the range of 40 to 150 Pa.s, preferably 40 to 110 Pa.s, more preferably 50 to 90 Pa.s. A viscosity lower than the range described above unfavorably results in separation of water or oil with the passage of time. An aerated processed food product having a viscosity higher than the range described above is difficult to mix with another food material.
The viscosity in the present invention is determined by converting a reading obtained using a BH-type viscometer after two revolutions under the following conditions: the number of revolutions of 4 rpm, rotor No. 6, and a temperature of 20°C.

The viscosity range described above can be achieved by controlling the egg white, whey, and hydrogenated starch hydrolysate contents described below.

Egg white for use in the present invention is not particularly limited. More specifically, examples of the egg white include liquid egg white obtained by separating a yolk from a cracked egg through a routine procedure, frozen-thawed egg white, and dried egg white. Provided that the foaming property of the egg white is maintained, a portion of the components of these types of egg white, such as lysozyme or glucose, may be removed, or these types of egg white may be treated with an enzyme, such as a protease.

Whey for use in the present invention may be produced by purifying acid whey or sweet whey, which is obtained as a by-product of cheese, acid casein, or rennet-casein produced from raw milk or a skimmed milk powder. In addition to the purified whey, concentrated whey, diluted whey, whey paste, and dried whey may be used. In general, although whey is substantially free of casein, lactoprotein contains casein as a main component and is different from whey. Use of a whole milk powder of a skimmed milk powder instead of whey may reduce foam stability probably because of casein. Thus, the casein content (based on solid content) is preferably 5% or less, more preferably 1% or less, still more preferably substantially zero, of the whole milk raw material.
The casein content of an aerated processed food product according to the present invention is preferably 1% or less, more preferably substantially zero.

The egg white content and the whey content are preferably in the range of 0.8% to 5%, more preferably 1% to 4%, based on solid content. The ratio of the egg white content to the whey content is preferably in the range of 1:6 to 6:1, more preferably 1:4 to 1:1. An excessively low egg white content and an excessively low content ratio result in low foam stability. On the other hand, an excessively high egg white content and an excessively high content ratio result in excessively hard foam like a fish cake, which is difficult to mix with another food material and to use as a topping. An excessively low whey content and an excessively low content ratio result in insufficient foaming, a high specific gravity, and an unpleasant melt-in-the-mouth texture unlike meringue-like food. On the other hand, an excessively high whey content and an excessively high content ratio tend to result in hard foam.

An aerated processed food product according to the present invention contains a hydrogenated starch hydrolysate derived from a raw sugar having a DE value of 40 or less. The aerated processed food product can have a pleasant melt-in-the-mouth texture and high foam stability. The term "hydrogenated starch hydrolysate", as used herein, refers to a mixture of sugar alcohols produced by reducing starch saccharide (starch sugar) by hydrogenation treatment. The starch hydrolysate is produced by hydrolysis of starch with an acid or an enzyme. Hydrogenated starch hydrolysate is also referred to as reduced starch saccharide, reduced starch syrup, or dextrin alcohol. For a hydrogenated starch hydrolysate in the present invention, it is important to use a raw sugar, that is, a starch saccharide (starch sugar) having a DE value of 40 or less, preferably 30 or less. The term "DE value" is an abbreviation of "dextrose equivalent" and is one of quality indication methods for starch saccharide (starch sugar) or an indicator of the degree of hydrolysis of starch. A higher DE indicates a higher degree of hydrolysis, and a lower DE indicates a lower degree of hydrolysis.

Use of a hydrogenated starch hydrolysate derived from a raw sugar having a DE value higher than the range described above results in an aerated processed food product having an unpleasant melt-in-the-mouth texture. Although a smaller DE value is preferred, a hydrogenated starch hydrolysate having a DE value of less than 10 is generally not commercially available. Thus, a DE value of 10 or more is preferred.

The hydrogenated starch hydrolysate content of an aerated processed food product according to the present invention is preferably in the range of 2% to 20%, more preferably 3.5% to 14%, based on solid content. A hydrogenated starch hydrolysate content lower than the range described above results in an unpleasant melt-in-the-mouth texture. On the other hand, a hydrogenated starch hydrolysate content higher than the range is uneconomical because it is difficult to improve the melt-in-the-mouth texture as the content increases.

In an aerated processed food product according to the present invention, the foam preferably has a specific gravity in the range of approximately 0.3 to 0.7, more preferably approximately 0.4 to 0.6. A specific gravity lower than the range described above results in low foam stability. On the other hand, a specific gravity higher than the range results in insufficient foaming unlike meringue and an unpleasant melt-in-the-mouth texture.
The specific gravity is determined by filling a 90-mL graduated cylinder with an aerated processed food product while preventing contamination by air, measuring the mass of the aerated processed food product, and calculating the specific gravity (the mass ratio of the aerated processed food product to water) from the volume of the graduated cylinder (90 mL) and the mass of the aerated processed food product.

An aerated processed food product according to the present invention preferably contains a pH-adjusting agent. A pH-adjusting agent is preferably used to control the pH of an aerated processed food product according to the present invention in the range of 4.5 to 6, more preferably 5.0 to 5.5. An excessively low pH may result in insufficient foaming because of acid denaturation of a protein in egg white and whey. On the other hand, an excessively high pH may result in soft foam and low foam stability.

Examples of the pH-adjusting agent include organic acids, such as acetic acid, lactic acid, citric acid, and malic acid, and salts thereof, inorganic acids, such as phosphoric acid, and salts thereof, fruit juices, such as lemon, orange, and apple, and acid fermented food, such as vinegar and yogurt.

In addition to these components, an aerated processed food product according to the present invention may contain saccharides, such as glucose, maltose, trehalose, sucralose, and oligosaccharide, emulsifying agents, such as a sucrose fatty acid esters, glycerin fatty acid esters, organic acid monoglycerides, lecithin, and polysorbate, vitamins, such as vitamin A, vitamin C, vitamin E, and vitamin K, various minerals, such as iron and magnesium, perfumes, colorants, seasonings, and preservatives, if necessary.

In order to improve foaming of a mixture and prevent collapse under pressure, polysaccharide thickeners and gelatin may also be used. Examples of the polysaccharide thickeners include sodium alginate, fermented cellulose, xanthan gum, guar gum, locust bean gum, γ-carrageenan, tara gum, gellan gum, tamarind seed gum, arabinogalactan, and pullulan. Among these, in order to reduce shear resistance during the agitation of a mixture to improve foaming, pseudoplastic xanthan gum, fermented cellulose, guar gum, locust bean gum, γ-carrageenan, tara gum, and gellan gum are preferred, and xanthan gum is particularly preferred.

When polysaccharide thickeners and gelatin are used, their contents are preferably in the range of 0.3% to 2%. An excessively low polysaccharide thickener content tends to result in collapse under pressure, and an excessively high polysaccharide thickener content tends to result in an unpleasant melt-in-the-mouth texture and a viscous texture.

An aerated processed food product according to the present invention has high foam stability, particularly high foam stability in a frozen state. Even after the aerated processed food product is stored in a container in a freezer for one year, the thawed processed food has the same foaming and foam stability as before freezing and has a foamy meringue-like texture. Thus, an aerated processed food product according to the present invention is suitable for distribution in a frozen state in a container. An aerated processed food product according to the present invention may be a frozen aerated processed food product.

An aerated processed food product according to the present invention can be produced as described below. First, a fat, egg white, whey, ahydrogenated starch hydrolysate, and other optional components are mixed to produce a mixture. The mixture is whipped by agitation or gas blowing to produce an aerated mixture. The aerated mixture is then heated at a temperature in the range of 60°C to 90°C, preferably 75°C to 85°C, and is packed into a container to produce an aerated processed food product. The aerated processed food product may be frozen, if necessary. In this case, the mixture is preferably whipped such that the aerated processed food product has a specific gravity in the range of 0.3 to 0.7.

An excessively high heating temperature higher than the range described above results in excessive formation of an aggregate of egg white and whey proteins, thereby impairing a meringue-like fluffy melt-in-the-mouth texture. On the other hand, a heating temperature lower than the range results in low foam stability and low freezing resistance. The heating time at the heating temperature is not particularly limited, provided that protein aggregates are not excessive formed and that the aerated processed food product has high foam stability. The heating time is preferably in the range of 0.5 to 20 minutes, more preferably 1 to 10 minutes.

In accordance with a more specific method for producing an aerated processed food product according to the present invention, for example, the mixture components are agitated and degassed in a mixer having a degassing function to produce a mixture. The mixture is agitated and whipped while a gas, such as air or nitrogen gas, is blown into the mixture, thereby producing an aerated mixture. The aerated mixture is then heated in a tubular heat exchanger at a temperature in the range of 60°C to 90°C. Thus, an aerated processed food product according to the present invention can be produced. The aerated processed food product has high freezing resistance and can therefore be stored in a frozen state in a container.

When the mixture containing the raw materials, such as egg white and whey, of an aerated processed food product according to the present invention is whipped and heated under the conditions described above, egg white and whey proteins partly aggregate into a polymer. Thus, an aerated processed food product according to the present invention has higher foam stability.

Among the aspects of the present invention, preferably, ovalbumin (having a molecular weight of approximately 45,000), which is a main protein ofegg white, β-lactoglobulin (having a molecular weight of approximately 18,000), which is a main protein of whey, and a polymer having a high molecular weight of 210,000 or more are detected by SDS-PAGE without performing treatment with a reducing agent, such as 2-mercaptoethanol. When ovalbumin and β-lactoglobulin entirely aggregate to form a polymer, that is, no bands of ovalbumin and β-lactoglobulin are observed in SDS-PAGE, the melt-in-the-mouth texture deteriorates.

The egg white proteins include ovalbumin (having a molecular weight of approximately 45,000), which constitutes 50% to 60% of the proteins, ovotransferrin (having a molecular weight of approximately 78,000), and lysozyme (having a molecular weight of approximately 14,300). The whey proteins include β-lactoglobulin (having a molecular weight of approximately 18,000), which constitutes 40% to 50% of the proteins, α-lactalbumin (having a molecular weight of approximately 14,000), and serum albumin (having a molecular weight of approximately 66,300). Since ovalbumin and β-lactoglobulin are main proteins that constitute approximately half of the egg white and whey proteins, aggregation and polymerization of the entire ovalbumin and β-lactoglobulin probably results in an unpleasant melt-in-the-mouth texture.

The tertiary structure of unaggregated egg white and whey proteins is a folded structure in which the hydrophobic groups of the proteins are packed inside because of a hydrophobic bond between the hydrophobic groups. A hydrophobic group of one protein is exposed outward by treatment that causes aggregation, such as heating, and forms a hydrophobic bond or a disulfide bond with another protein, thereby forming a polymer. In the present invention, the formation of a polymer through the aggregation of part of egg white proteins and part of whey proteins means that, for example, part of ovalbumin and part of serum albumin form the polymer and the remaining proteins do not form a polymer.

The formation of a polymer through the aggregation of part of egg white proteins and part of whey proteins can be examined by one of the following analysis methods.

### <Analysis Method I>

Whipped aerated mixtures for forming an aerated processed food product according to the present invention before and after heating are prepared as analytical samples. These mixtures are analyzed without performing treatment with a reducing agent, such as 2-mercaptoethanol. The analysis method follows SDS-PAGE procedures described below. An analytical sample satisfying the following conditions 1) to 3) is an aerated processed food product according to the present invention.
1) At least a band of ovalbumin of egg white proteins in the sample after heating is detected, and a band of at least one of ovalbumin, ovotransferrin, and lysozyme is weaker after heating than before heating.
2) At least β-lactoglobulin of whey proteins in the sample after heating is detected, and a band of at least one of β-lactoglobulin, α-lactalbumin, and serum albumin is weaker after heating than before heating.
3) Although no band corresponding to a molecular weight of 210,000 or more is observed in the sample before heating, a band corresponding to a molecular weight of 210,000 or more is detected in the sample after heating.
Since the bands of both the egg white protein and whey protein are weaker in 1) and 2), the band corresponding to a molecular weight of 210,000 or more observed in the sample after heating can be ascribed to a polymer of the egg white protein and the whey protein.

### <Analysis Method II>

Aerated processed food products subjected to and not subjected to treatment with a reducing agent, such as 2-mercaptoethanol, are prepared as analytical samples. The analysis method follows SDS-PAGE procedures described below. An analytical sample satisfying the following conditions 1) to 3) is an aerated processed food product according to the present invention.
1) At least a band of ovalbumin of egg white in the sample not subjected to treatment with the reducing agent is detected, and a band of at least one of ovalbumin, ovotransferrin, and lysozyme is weaker in the sample not subjected to treatment with the reducing agent than in the sample subjected to treatment with the reducing agent.
2) At least a band of β-lactoglobulin of whey in the sample not subjected to treatment with the reducing agent is detected, and a band of at least one of β-lactoglobulin, α-lactalbumin, and serum albumin is weaker in the sample not subjected to treatment with the reducing agent than in the sample subjected to treatment with the reducing agent.
3) Although a band corresponding to a molecular weight of 210,000 or more is observed in the sample not subjected to treatment with the reducing agent, no band corresponding to a molecular weight of 210,000 or more is observed in the sample subjected to treatment with the reducing agent.

In the analysis methods I and II, the fact that proteins having a molecular weight of 210,000 or more are derived from both egg white and whey proteins can be confirmed by the fact that a band corresponding to the molecular weight of 210,000 or more in Western blotting indicates a reaction between egg white and whey proteins and their respective antibodies. Furthermore, the fact that a particular band in SDS-PAGE is a band of a particular protein, including ovalbumin (having a molecular weight of approximately 45,000) of egg white proteins, can be confirmed by the molecular weight using a molecular-weight marker or by an amino acid sequence analysis of the band through routine procedures.

Since both an egg white protein and a whey protein in an aerated mixture produced by whipping a mixture containing egg white, whey, and a particular hydrogenated starch hydrolysate partly aggregate to form a polymer, the resulting aerated processed food product has improved foam stability and a pleasant melt-in-the-mouth texture. In contrast, when neither egg white proteins nor whey proteins aggregate to form a polymer, that is, when no band corresponding to a molecular weight of 210,000 or more is observed in the sample after heating in the analysis method I, or when no band corresponding to a molecular weight of 210,000 or more is observed in the sample not subjected to treatment with the reducing agent in the analysis method II, the resulting aerated processed food product has low foam stability, and it is not possible to impart freezing resistance and heat resistance to the foam. On the other hand, when the main protein of egg white or the main protein of whey is considered to entirely aggregate in the sample after heating in the analysis method I because, although a band corresponding to a molecular weight of 210,000 or more is detected, no band of ovalbumin, which is the main protein of egg white, is detected, or no band of β-lactoglobulin, which is the main protein of whey, is detected, the resulting foam is hard and cannot have a fluffy meringue-like texture or melt-in-the-mouth texture.

An aerated processed food product according to the present invention can be used in various foods that require a fluffy mild texture. For example, an aerated processed food product according to the present invention can be used in various foods, including acid seasonings, such as mayonnaise and dressings, sauces, such as a white sauce and a carbonara sauce, processed egg products, such as omelets and fried eggs, frozen desserts, such as mousse, Bavarian cream, pudding, ice cream, and sherbet, drinks, such as milk shakes, cappuccinos, and smoothies, fried food, such as fritters and tempuras, and cakes, such as souffle, hot cakes, sponge cakes, and macaroons.

The mixing ratio of an aerated processed food product according to the present invention to the food described above depends on the type of food and may be such that the aerated processed food product can have a fluffy mild texture.

For example, in the manufacture of aerated acid seasonings, such as mayonnaise and dressings, the mixing ratio (mass ratio) of an aerated processed food product to an acid seasoning is preferably in the range of 5:1 to 1:5.
In the manufacture of aerated sauces, such as a white sauce, the mixing ratio (mass ratio) of an aerated processed food product to a sauce is preferably in the range of 1:20 to 3:1.
In the manufacture of aerated frozen desserts, such as ice creams, including ice cream, ice milk, and lacto ice, the mixing ratio (mass ratio) of an aerated processed food product to a frozen dessert mix is preferably in the range of 1:9 to 1:1. In the manufacture of aerated frozen desserts, such as sherbet, the mixing ratio (mass ratio) of an aerated processed food product to a frozen dessert mix is preferably in the range of 1:9 to 2:1.
In the manufacture of aerated drinks, such as smoothies, the mixing ratio (mass ratio) of an aerated processed food product to a drink is preferably in the range of 1:80 to 1:1. In the manufacture of aerated fried food, such as fritters, the mixing ratio (mass ratio) of an aerated processed food product to batter is preferably in the range of 1:20 to 1:1.

When the mixing ratio of an aerated processed food product according to the present invention to the food described above is low, the fluffy mild texture of the aerated processed food product is difficult to produce in the food. On the other hand, a high mixing ratio of an aerated processed food product to the food described above may result in an imbalance in the entire food flavor.

### EXAMPLES

The present invention will be further described in the following examples and comparative examples. The present invention is not limited to these examples.

### EXAMPLE 1

The raw materials having the composition listed in the following recipe 1 were mixed in a mixer having a degassing function and were degassed with agitation at a degree of vacuum of 0.1 MPa, thus producing a mixture. The mixture was whipped in a mixer while air was blown into the mixture to produce an aerated mixture. The aerated mixture was then heated at 75°C for three minutes through a tubular heat exchanger and was packed into a thermoplastic polyethylene container to produce an aerated processed food product according to the present invention. The aerated processed food product was frozen at -20°C for one month. The aerated processed food product had a fat content of 0%, a casein content of 0%, a viscosity (20°C) of 80 Pa·s, a specific gravity of 0.4, and a pH of 5.5.

### [Recipe 1]

| | |
|---|---|
| Raw egg white | 30% (3% based on solid content) |
| Whey (based on solid content) | 3% |
| Hydrogenated starch hydrolysate derived from raw sugar having DE value of 20 | 20% (14% based on solid content) |
| Xanthan gum | 1% |
| Citric acid | 0.3% |
| Fresh water | remainder |
| Total | 100% |

(Hydrogenated starch hydrolysate was "PO-20" manufactured by Mitsubishi Shoji Foodtech Co., Ltd., solid content 70%)

### [Test Example 1]

The effects of the type of saccharide for use in an aerated processed food product on the melt-in-the-mouth texture and foam stability of the aerated processed food product were examined. More specifically, an aerated processed food product was produced and frozen in the same manner as in Example 1 except that saccharides listed in Table 1 were used. The properties of the resulting aerated processed food products were then measured and evaluated as described below. Table 1 shows the results.
Hydrogenated starch hydrolysate derived from raw sugars having DE values of 30, 40, and 65 were "Eswee 30" (manufactured by B Food Science Co., Ltd., solid content 70%), "PO-40" (manufactured by Mitsubishi Shoji Foodtech Co., Ltd., solid content 70%), and Eswee 500 (B Food Science Co., Ltd., solid content 70%).
Replacement of a hydrogenated starch hydrolysate by a powdered dextrin, trehalose, or maltooligosaccharide was performed such that their contents were the same on a solid content basis. More specifically, a hydrogenated starch hydrolysate (solid content 70%) 20% in Example 1 was replaced by a powdered saccharide 14%.
The resulting aerated processed food product had a fat content of 0%, a casein content of 0%, a viscosity in the range of 50 to 90 mPa·s, a specific gravity in the range of 0.4 to 0.6, and a pH of 5.5.

### (1) Melt-In-The-Mouth Texture

An aerated processed food product frozen for one month was thawed at 5°C and was eaten to evaluate the melt-in-the-mouth texture in accordance with the following criteria.

### [Evaluation Criteria]

○: A particularly pleasant melt-in-the-mouth texture characteristic of meringue.
Δ: A pleasant melt-in-the-mouth texture characteristic of meringue.
X: Lack of a pleasant melt-in-the-mouth texture characteristic of meringue.

### (2) Air Bubble Stability

The specific gravity of an aerated processed food product before freezing was compared with the specific gravity of the aerated processed food product that had been frozen for one month, thawed at 5°C, and left to stand at 5°C for one week to evaluate foam stability in accordance with the following criteria.

### [Evaluation Criteria]

○: An increase in specific gravity relative to the specific gravity of the aerated processed food product before freezing was less than 10%.
Δ: An increase in specific gravity relative to the specific gravity of the aerated processed food product before freezing was 10% or more and less than 20%.
X: An increase in specific gravity relative to the specific gravity of the aerated processed food product before freezing was 20% or more.

**[Table 1]**

| | Type of saccharide | Melt-in-the-mouth texture | Foam stability |
|---|---|---|---|
| Example 1 | Hydrogenated starch hydrolysate having DE value of 20 | ○ | ○ |
| Example 2 | Hydrogenated starch hydrolysate having DE value of 30 | ○ | ○ |
| Example 3 | Hydrogenated starch hydrolysate having DE value of 40 | Δ | ○ |
| Comparative example 1 | Hydrogenated starch hydrolysate having DE value of 65 | X | ○ |
| Comparative example 2 | Dextrin | X | X |
| Comparative example 3 | Trehalose | X | ○ |
| Comparative example 4 | Maltooligosaccharide | X | X |

The results in Table 1 show that the aerated processed food products containing egg white, whey, and a hydrogenated starch hydrolysate derived from a raw sugar having a DE value of 40 or less had a pleasant melt-in-the-mouth texture and high foam stability (Examples 1 to 3). In particular, use of a hydrogenated starch hydrolysate derived from a raw sugar having a DE value of 30 or less produced a more pleasant melt-in-the-mouth texture. In contrast, Comparative Example 1 shows that use of a hydrogenated starch hydrolysate derived from a raw sugar having a DE value of more than 40 resulted in an unpleasant melt-in-the-mouth texture. Comparative Examples 2 to 4, in which the hydrogenated starch hydrolysate was replaced by various saccharides, show that the resulting aerated processed food products had an unpleasant melt-in-the-mouth texture and low foam stability.

### COMPARATIVE EXAMPLE 5

An aerated processed food product was produced and frozen in the same manner as in Example 1 except that the raw egg white (based on solid content) 3% was replaced by whey (based on solid content) 3%.

In accordance with the evaluation method and the evaluation criteria described in the test example 1, the aerated processed food product had a pleasant melt-in-the-mouth texture but low foam stability.

### COMPARATIVE EXAMPLE 6

An aerated processed food product was produced and frozen in the same manner as in Example 1 except that the whey (based on solid content) 3% was replaced by raw egg white (based on solid content) 3%.

In accordance with the evaluation method and the evaluation criteria described in the test example 1, the aerated processed food product had high foam stability but an unpleasant melt-in-the-mouth texture.

### EXAMPLE 4

An aerated processed food product according to the present invention was produced in the same manner as in Example 1 except that the hydrogenated starch hydrolysate having a DE value of 20 ("PO-20" manufactured by Mitsubishi Shoji Foodtech Co., Ltd., solid content 70%) was replaced by a hydrogenated starch hydrolysate having a DE value of 15 ("Eswee 100" manufactured by B Food Science Co., Ltd., solid content 70%), the hydrogenated starch hydrolysate content (solid content 70%) was changed from 20% to 5%, and the egg white content (based on solid content) and the whey content (based on solid content) were changed from 3% to 1% and 4%, respectively. The resulting aerated processed food product had a fat content of 0%, a casein content of 0%, and a viscosity (20°C) of 50 Pa.s.

The melt-in-the-mouth texture and foam stability were evaluated in accordance with the evaluation method described in the test example 1. The aerated processed food product according to Example 4 had a pleasant melt-in-the-mouth texture and high foam stability.

### EXAMPLE 5

An aerated processed food product according to the present invention was produced in the same manner as in Example 1 except that the raw egg white content (based on solid content) and the whey content (based on solid content) were changed from 3% to 1%, and raw yolk (based on solid content) 3% was added. The resulting aerated processed food product had a fat content of 1%.

The melt-in-the-mouth texture and foam stability were evaluated in accordance with the evaluation method described in the test example 1. The aerated processed food product according to Example 5 had a satisfactory melt-in-the-mouth texture and satisfactory foam stability, although the melt-in-the-mouth texture and foam stability were slightly inferior to those of Example 1.

### EXAMPLE 6

An aerated processed food product was produced in the same manner as in Example 1 except that a skimmed milk powder 5% was used together with whey (based on solid content) 3% as a milk raw material, and carrageenan 0.3% was used together with xanthan gum 1% as a polysaccharide thickener raw material.
The skimmed milk powder had a protein content (based on solid content) of 34%. The ratios of casein and whey to the proteins of the skimmed milk powder were 80% and 20%, respectively. (More specifically, the casein content of the aerated processed food product according to Example 6 derived from the skimmed milk powder was 5 x 0.34 x 0.8 = 1.4%, and the whey content of the aerated processed food product according to Example 6 derived from the skimmed milk powder was 5 x 0.34 x 0.2 = 0.3%.)
Thus, the total whey content of the aerated processed food product according to Example 6 was 4.3%. The casein content of the aerated processed food product according to Example 6 was 1.4%. The aerated processed food product had a viscosity (20°C) of 120 Pa·s.

The melt-in-the-mouth texture and foam stability were evaluated in accordance with the evaluation method described in the test example 1. The aerated processed food product according to Example 6 had a pleasant melt-in-the-mouth texture but slightly lower foam stability than Example 1. Thus, preferably, casein is not contained to improve foam stability.

### [Test Example 2]

The effects of specific gravity, pH, and heating conditions on the melt-in-the-mouth texture and foam stability of an aerated processed food product were examined. More specifically, an aerated processed food product was produced in the same manner as in Example 1 except that the specific gravity, pH, and heating conditions listed in Table 2 were used. The aerated processed food products were then evaluated in accordance with the evaluation method and evaluation criteria described in the test example 1.
The pH was controlled via the citric acid content. The specific gravity was controlled via the air blowing time during agitation.
The resulting aerated processed food products had a fat content of 0%, a casein content of 0%, and a viscosity (20°C) in the range of 50 to 90 mPa·s.

**[Table 2]**

| | Aerated processed food product | | | Effects | |
|---|---|---|---|---|---|
| | Specific gravity | pH | Heating Condition | Melt-in-the-mouth texture | Foam stability |
| Example 1 | 0.4 | 5.5 | 75°C | ○ | ○ |
| No. 1 | 0.6 | 5.0 | 85°C | ○ | ○ |
| No. 2 | 0.8 | 5.0 | 85°C | Δ | ○ |
| No. 3 | 0.2 | 5.0 | 85°C | ○ | Δ |
| No. 4 | 0.6 | 6.5 | 85°C | ○ | Δ |
| No. 5 | 0.6 | 5.0 | 70°C | ○ | Δ |
| No. 6 | 0.6 | 5.0 | 90°C | Δ | ○ |

Table 2 shows that judging from Example 1 and Nos. 1 to 3, a specific gravity in the range of 0.3 to 0.7, preferably 0.4 to 0.6, resulted in a pleasant melt-in-the-mouth texture and high foam stability, a specific gravity of less than 0.3 resulted in low foam stability, and a specific gravity of more than 0.7 resulted in an unpleasant melt-in-the-mouth texture;
judging from Example 1 and Nos. 1 and 4, a pH in the range of 4.5 to 6, preferably 5.0 to 5.5, resulted in a pleasant melt-in-the-mouth texture and high foam stability, and a pH of more than 6 resulted in low foam stability; and
judging from Example 1 and Nos. 1, 5, and 6, a heating condition in the range of 60°C to 90°C, preferably 75°C to 85°C, resulted in a pleasant melt-in-the-mouth texture and high foam stability, a heating condition of less than 75°C resulted in low foam stability, and a heating condition of more than 85°C resulted in an unpleasant melt-in-the-mouth texture.

### EXAMPLE 7

An aerated processed food product according to the present invention was produced in the same manner as in Example 1 except that the composition listed in the following recipe 2 was used. The aerated processed food product had a fat content of 0%, a casein content of 0%, a viscosity (20°C) of 40 Pa·s, a specific gravity of 0.4, and a pH of 5.0.

### [Recipe 2]

| | |
|---|---|
| Raw egg white (solid content 10%) | 40% (4% based on solid content) |
| Whey (based on solid content) | 4% |
| Hydrogenated starch hydrolysate derived from raw sugar having DE value of 20 | 10% |
| Trehalose | 5% |
| Xanthan gum | 0.5% |
| Sodium alginate | 0.4% |
| Calcium lactate | 0.3% |
| Citric acid | 0.35% |
| Fresh water | remainder |
| Total | 100% |

(Hydrogenated starch hydrolysate was "PO-20" manufactured by Mitsubishi Shoji Foodtech Co., Ltd., solid content 70%)

The melt-in-the-mouth texture and foam stability were evaluated in accordance with the evaluation method described in the test example 1. The aerated processed food product according to Example 7 had a pleasant melt-in-the-mouth texture and high foam stability.

### <State of Protein in Aerated processed food product Examined by SDS-PAGE Analysis of Analysis Method I>

### (A) Description of SDS-PAGE Analysis Method and Preparation of Sample to be Developed

Samples of mixtures containing air bubbles before and after heating according to Example 7 were subjected to sodium dodecyl sulfate-polyacrylamide gel electrophoresis (SDS-PAGE) analysis using a Laemmli method under the following measurement conditions. In this case, the samples prepared without performing treatment with a reducing agent that breaks a disulfide bond of proteins were subjected to the electrophoretic analysis. For comparison purposes, raw egg white and whey were also developed. In this electrophoresis pattern, the uppermost band on the polyacrylamide gel corresponds to a protein having a molecular weight of 210,000 or more beyond the detection range of the polyacrylamide gel. Fig. 1 shows the results.

### (B) Measurement Conditions for SDS-PAGE Analysis

Polyacrylamide gel (SDS-PAGE mini, 4-20% (manufactured by Tefco): 4% to 20% gradient gel, molecular weight detection range 6,500 to 205,000
Protein concentration of sample: 1 mg/ml
Stain solution: coomassie brilliant blue G250 (CBB)
stain solution concentration: 1 g/L
Staining conditions: 40 rpm for one hour
Decolorizing conditions: 40 rpm for six hours

### (C) Fig. 1 Description of Developed Sample in Each Lane

Lane 1: molecular-weight marker
Lane 2: raw egg white
Lane 3: whey
Lane 4: aerated mixture before heating
Lane 5: aerated mixture after heating

### (D) Results and Discussion

Fig. 1 shows the SDS-PAGE analysis results of Example 7. The SDS-PAGE analysis photograph of Fig. 1 showed the following 1) to 3). Thus, it is understood that the aerated processed food product according to Example 7 satisfies all the conditions 1) to 3) in the analysis method I in the paragraph [0037].
1) In the sample of the aerated mixture after heating (lane 5), an ovalbumin band was detected, and ovalbumin, ovotransferrin, and lysozyme bands were weaker than those of the aerated mixture before heating (lane 4).
2) In the sample of the aerated mixture after heating (lane 5), a β-lactoglobulin band was detected, and a serum albumin band was weaker than that of the aerated mixture before heating (lane 4).
3) Although no band corresponding to a molecular weight of 210,000 or more was observed in the sample of the aerated mixture before heating (lane 4), the uppermost band on the polyacrylamide gel, that is, a band corresponding to a molecular weight of 210,000 or more was detected in the sample of the aerated mixture after heating (lane 5).

The bands of the electrophoresis patterns before and after heating were assigned to their respective proteins by comparison with reference egg white and whey electrophoresis patterns. Ovotransferrin and ovalbumin of egg white and serum albumin of whey having weaker bands are considered to be heat-labile proteins. Since many of partly aggregating proteins are derived from egg white proteins, partial aggregation of egg white proteins probably contributes greatly to the foam stability of the aerated processed food product according to Example 7.

Two samples of the aerated mixture after heating according to Example 7 were prepared: one (+) treated with 2-mercaptoethanol, and the other (-) not treated with 2-mercaptoethanol. These samples were subjected to electrophoretic analysis as described above. As a result, a band corresponding to a molecular weight of 210,000 or more was detected in the sample (-) not treated with 2-mercaptoethanol, but no band corresponding to a molecular weight of 210,000 or more was detected in the sample (+) treated with 2-mercaptoethanol. Furthermore, a band corresponding to a molecular weight in the range of approximately 45,000 to 78,000 was weaker in the sample (-) not treated with 2-mercaptoethanol than in the sample (+) treated with 2-mercaptoethanol. This result agrees with the result of Fig. 1.

### EXAMPLE 8

The raw materials of the following recipe 3 were mixed in a mixer to produce an acid liquid seasoning. 1 kg of the thawed aerated processed food product prepared in Example 1 and 1 kg of the acid liquid seasoning (mass ratio of 1:1) were weighed (2 kg in total) in a bowl of a tabletop Hobart mixer (Kitchen Aid Heavy Duty, manufactured by KitchenAid Inc., 5 quart) and were agitated at an agitation speed of 200 rpm for one minute to prepare an aerated liquid seasoning.

### [Recipe 3]

### (Preparation of French Dressing)

| | |
|---|---|
| Edible oil | 20% |
| Brewed vinegar | 15% |
| Sodium chloride | 4% |
| Yolk | 1% |
| Sodium glutamate | 0.5% |
| Spice | 0.5% |
| Fresh water | remainder |
| Total | 100% |

The resulting aerated liquid seasoning had preferred textures, such as a fluffy texture and a pleasant melt-in-the-mouth texture.

### EXAMPLE 9

200 g of the thawed aerated processed food product prepared in Example 1 and 400 g of a commercially available carbonara sauce (carbonara sauce manufactured by Kewpie Corp.) were mixed (at a mass ratio of 1:2) to prepare an aerated carbonara sauce.

The aerated carbonara sauce had preferred textures, such as a fluffy texture and a pleasant melt-in-the-mouth texture.

### EXAMPLE 10

The raw materials of the following recipe 4 were mixed in a mixer to prepare a liquid egg mixture. 100 g of the thawed aerated processed food product prepared in Example 1 and 100 g of the liquid egg mixture were then weighed (mass ratio of 1:1) and were agitated with a whipper for one minute to prepare an aerated liquid egg mixture. The aerated liquid egg mixture was poured into a rectangular hot plate maintained at 90°C and was formed into a thick omelet, thus producing an aerated processed egg product (thick omelet).

### [Recipe 4]

### (Preparation of Liquid Egg Mixture)

| | |
|---|---|
| Liquid whole egg | 70% |
| Soy sauce | 5% |
| Caster sugar | 5% |
| Xanthan gum | 1% |
| Fresh water | remainder |
| Total | 100% |

The resulting aerated processed egg product (thick omelet) had preferred textures, such as a fluffy texture and a pleasant melt-in-the-mouth texture.

### EXAMPLE 11

The raw materials having the composition listed in the following recipe 5 were charged into a double boiler, were mixed at 70°C for 10 minutes, were emulsified at a pressure of 150 Kg/cm², and were cooled to 5°C. A frozen dessert mix having an overrun of 54% in a plastic state was then produced in an ice cream freezer at a temperature in the range of -2°C to -8°C. 1 kg of the thawed aerated processed food product prepared in Example 1 and 1 kg of the frozen dessert mix were then mixed in a mixer at -3°C (at a mass ratio of 1:1), were charged into a 180-mL cup, and were frozen in a freezer at -30°C to produce a frozen dessert. After that, the frozen dessert was stored in a freezer at-20°C. Thus, an aerated frozen dessert was prepared.

### [Recipe 5]

### (Preparation of Frozen Dessert Mix)

| | |
|---|---|
| Sugar | 20% |
| Skimmed milk powder | 10% |
| Unsalted butter | 10% |
| Dairy cream | 5% |
| Emulsion stabilizer | 0.5% |
| Fresh water | remainder |
| Total | 100% |

The aerated frozen dessert had a fluffy texture and a pleasant melt-in-the-mouth texture. The aerated frozen dessert was easy to spoon up.

### EXAMPLE 12

20 g of the thawed aerated processed food product produced in Example 1 and 100 g of an acidic beverage (pH 3.7) of 100% orange juice were mixed (at a mass ratio of 1:50) to prepare an aerated acidic beverage.

The aerated acidic beverage was free from graininess, had a good mouth-feel, went down smoothly, and had a fluffy texture.

### EXAMPLE 13

200 g of milk and 120 g of fresh water were added to 200 g of a commercially available tempura powder ("Kin tempura ko" manufactured by Showa Sangyo Co., Ltd.) to prepare a batter for fritters. 200 g of the thawed aerated processed food product of Example 1 and 500 g of the batter for fritters were then mixed (at a mass ratio of 2:5) to prepare an aerated batter for fritters. A prawn coated with a dusting powder was then evenly dipped in the aerated batter for fritters and was fried in an oil at 175°C for three minutes to prepare a prawn fritter.

The prawn fritter had a crunchy texture and a fluffy mild texture.

## Claims

1. An aerated processed food product having a fat content of 5% or less and a viscosity (20°C) of 40 to 150 Pa.s, **characterized by** containing egg white, whey, and a hydrogenated starch hydrolysate derived from a raw sugar having a DE value of 40 or less.

2. The aerated processed food product according to Claim 1, wherein the aerated processed food product has a specific gravity of 0.3 to 0.7.

3. The aerated processed food product according to Claim 1 or 2, wherein the aerated processed food product has a pH of 4.5 to 6.

4. The aerated processed food product according to any one of Claims 1 to 3, produced by whipping a mixture containing egg white, whey, and a hydrogenated starch hydrolysate derived from a raw sugar having a DE value of 40 or less, heating the mixture at a temperature of 60°C to 90°C, and packing the product in a container.

5. A food, produced using the aerated processed food product according to any one of Claims 1 to 4.

6. The food according to Claim 5, wherein the food is one of acid seasonings, sauces, processed egg products, frozen desserts, drinks, and fried food.

7. A method for producing an aerated processed food product having a fat content of 5% or less and a viscosity (20°C) of 40 to 150 Pa.s, **characterized by** comprising:
whipping a mixture containing egg white, whey, and a hydrogenated starch hydrolysate derived from a raw sugar having a DE value of 40 or less;
heating the mixture at a temperature of 60°C to 90°C; and
packing the product in a container.
